# EUROPÄISCHE PATENTANMELDUNG

(11) **EP 2 770 273 A1**
(43) Veröffentlichungstag der Anmeldung: **27.08.2014**
(21) Anmeldenummer: 13155962.7
(22) Anmeldetag: 20.02.2013
(51) Int. Cl.: F24J 2/46, B08B 1/04, A46B 13/00, B62D 57/024

(54) **Selbstfahrende Reinigungsvorrichtung**

(71) Anmelder: Hochschule Luzern Technik & Architektur, 6048 Horw (CH)
(72) Erfinder: de Angelis, Marco, CH-8047 Zürich (CH); della Torre, Marco, CH-6064 Kerns (CH)
(74) Vertreter: Rutz & Partner

(57) **Zusammenfassung**

Die Vorrichtung (1), die zum Reinigen einer Oberfläche (9), insbesondere einer Oberfläche (9) einer Fotovoltaikanlage, dient, umfasst wenigsten eine Reinigungseinheit (10), die ein nach unten gegen die Oberfläche (9) gerichtetes Reinigungselement (11) und ein Antriebselement (12) aufweist, welches mit einer Antriebseinheit (100) gekoppelt ist. Erfindungsgemäss ist das Antriebselement (12) ringförmig ausgestaltet, um eine Antriebsachse (x) drehbar gehalten und mit einer Steuervorrichtung (2) gekoppelt, welche wenigstens einen Verdränger (24) aufweist, der direkt oder indirekt derart mit dem Antriebselement (12) gekoppelt oder koppelbar ist, dass ein Teil des Antriebselements (12) nach unten gegen die Oberfläche (9) verschiebbar ist.

## Beschreibung

Die Erfindung betrifft eine selbstfahrende Vorrichtung, die für das Reinigen von Oberflächen, insbesondere von Solarpanels einer Fotovoltaikanlage, geeignet ist.

Aus dem Stand der Technik sind verschiedene Vorrichtungen bekannt, mittels denen die Oberflächen von Solarpanels von Fotovoltaikanlagen gereinigt werden können.

Aus [1], DE202011106278U1, ist eine Vorrichtung bekannt, die eine für die Reinigung von Solarpanels vorgesehene Reinigungseinheit umfasst, die von einem Fahrzeug über einen Schwenkarm gehalten wird. Vorrichtungen dieser Art können kaum ohne Personal betrieben werden.

Aus [2], US 2011/0137458A1, ist eine Vorrichtung bekannt, die ein selbstfahrendes Fahrzeug mit einem Schwenkarm umfasst, mittels dessen selbstfahrende Reinigungsvorrichtungen auf Solarmodulen abgesetzt und wieder entnommen werden können.

Aus [3], EP2420757A2, ist eine selbstfahrende Reinigungsvorrichtung bekannt, die einen Selbstlaufantrieb mit einer Mehrzahl von jeweils wahlweise aktiv oder passiv schaltbaren Saugnapfeinrichtungen aufweist. Der Antrieb mit den Saugnapfeinrichtungen ist aufwändig gestaltet, weshalb ein entsprechender Herstellungsaufwand sowie entsprechende Wartungskosten resultieren. Ferner ist die schrittweise Fortbewegung mit dem Reinigungsvorgang zu harmonisieren, wobei mit einer eher tiefen Arbeitsgeschwindigkeit zu rechnen ist.

Aus [4], EP2258490A2, ist eine Reinigungsvorrichtung bekannt, bei der zwei hydraulisch angetriebene Reinigungseinheiten von einer Führungsvorrichtung gehalten sind. Die zusätzliche Verwendung der Führungsvorrichtung erfordert relativ viel Raum, weshalb die Gestaltungsmöglichkeiten dieser Vorrichtung eingeschränkt sind.

Aus [5], EP 0 221 543 B1, eine Reinigungsvorrichtung bekannt, die ein tellerförmiges Trennelement aufweist, das zusammen mit einer zu reinigenden Oberfläche eine Druckreduzierzone einschliesst und das um eine Drehachse drehbar ist, die zu einer zur Oberfläche senkrechten Achse geneigt ist. Die Reinigungsvorrichtung umfasst zudem eine Einrichtung, die durch Ableiten eines Fluids in der Druckreduzierzone ein Vakuum erzeugt, sowie eine Antriebsquelle, die das Trennelement dreht, so dass die Reinigungsvorrichtung durch Saugwirkung an der Wandoberfläche haftet und durch Drehen des Trennelements bewegt wird. Der Vortrieb der Vorrichtung erfolgt daher durch die zur Wandoberfläche geneigten Reinigungselemente. Aufgrund der Neigung der tellerförmigen Reinigungselemente liegt jedoch nur ein Teil davon an der Wandoberfläche an, weshalb diese nur entlang einem Streifen gereinigt wird, welcher etwa einem Viertel des Durchmessers eines Reinigungselements entspricht. Auf diese Weise muss die Reinigungsvorrichtung mehrfach über denselben Bereich der Wandoberfläche geführt werden. Ferner können mit der Reinigungsvorrichtung nur Oberflächen gereinigt werden, die weitgehend eben sind. Grössere Stufen können hingegen nicht überwunden werden.

Der vorliegenden Erfindung liegt daher die Aufgabe zugrunde, eine verbesserte selbstfahrende Reinigungsvorrichtung zu schaffen.

Insbesondere ist eine einfach aufgebaute Reinigungsvorrichtung zu schaffen, die praktisch ohne Wartung betrieben werden kann.

Mit der Reinigungsvorrichtung sollen Oberflächen effizient und mit einem hohen Arbeitstempo gereinigt werden können. Vorzugsweise soll der gesamte Bereich der Oberfläche, der von der Reinigungsvorrichtung überfahren wird, in nur einem Durchgang vollständig gereinigt werden können.

Mit der Reinigungsvorrichtung sollen dabei auch unebene Oberflächen gereinigt werden können, die beispielsweise Stufen aufweisen. Weiterhin sollen auch geneigte Oberflächen gereinigt werden können.

Die Reinigungsvorrichtung soll mit einer oder mehreren Reinigungseinrichtungen ausgerüstet werden können. Zudem sollen unterschiedliche Reinigungstechniken einsetzbar sein. Beispielsweise soll die Wandoberfläche gebürstet und/oder gewaschen werden. Weiterhin sollen Saugvorrichtungen einsetzbar sein, mittels denen Staub oder Flüssigkeit abgesaugt wird.

Die Reinigungsvorrichtung soll mit unterschiedlichen Reinigungsmedien, wie Luft oder Wasser, und unterschiedlichen Antriebsmedien betrieben werden können. Vorzugsweise sollen für den Antrieb und die Reinigung dieselben Medien verwendbar sein. Beispielsweise soll Wasser für den Antrieb eines Motors und für das waschen der Oberflächen verwendet werden. Ferner sollen auch elektrische Antriebsmotoren einsetzbar sein.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die Vorrichtung, die zum Reinigen einer Oberfläche, insbesondere von Solarpanels einer Fotovoltaikanlage dient, umfasst wenigsten eine Reinigungseinheit, die ein nach unten gegen die Oberfläche gerichtetes Reinigungselement und ein Antriebselement aufweist, welches mit einer Antriebseinheit gekoppelt ist.

Erfindungsgemäss ist das Antriebselement ringförmig ausgestaltet, um eine Antriebsachse drehbar gehalten und mit einer Steuervorrichtung gekoppelt, welche wenigstens einen Verdränger aufweist, der direkt oder indirekt derart mit dem Antriebselement gekoppelt oder koppelbar ist, dass ein Teil des Antriebselements nach unten gegen die Oberfläche verschiebbar ist.

In einer ersten prinzipiellen Ausgestaltung ist der Verdränger direkt mit dem Antriebselement gekoppelt oder koppelbar und kann einen Teil des Antriebselements soweit verdrängen, dass dieser Teil die zu reinigende Oberfläche kontaktiert.

In einer zweiten prinzipiellen Ausgestaltung ist der Verdränger direkt mit dem Antriebselement gekoppelt oder koppelbar und das Antriebselement soweit neigbar, dass ein Teil davon durch Einwirkung des Verdrängers die Oberfläche kontaktiert.

In der ersten Ausgestaltung wird das Antriebselement im Bereich des Verdrängers deformiert. In der zweiten Ausgestaltung wird das Antriebselement als Ganzes geneigt. Der Verdränger kann daher direkt auf das formstabile Antriebselement einwirken und dieses neigen. Alternativ kann der Verdränger z.B. indirekt auf eine Welle einwirken, von der das Antriebselement gehalten wird. Durch Neigung der Welle in eine bestimmte Richtung wird daher auch das Antriebselement in diese Richtung geneigt.

Beim Betrieb der Reinigungsvorrichtung ist daher stets ein Teil des Antriebselements in Kontakt mit der zu reinigenden Oberfläche. Durch Drehung des Antriebselements um die Antriebsachse erfolgt somit ein Vorschub der Reinigungsvorrichtung, wobei weitere Teile des Antriebselements kontinuierlich oder schrittweise in Kontakt mit der Oberfläche gelangen. Durch den oder die Verdränger werden daher jeweils nächstfolgende Teile des Antriebselements gegen die Oberfläche geführt und in Kontakt mit der Oberfläche stehende Teile des Antriebselements wieder freigegeben.

Dadurch resultiert ein vorteilhafter Antriebsmechanismus, welcher mit unterschiedlichen Oberflächen optimal zusammenwirken kann. Da der Verdränger jeweils stets einen Teil des Antriebselements nach unten führt, können nicht nur ebene Oberflächen, sondern auch unebene und mit Stufen versehene Oberflächen problemlos abgefahren werden. Beim Auftreten einer Stufe wird der entsprechende Teil des Antriebselements weniger weit nach unten verdrängt und dafür die Reinigungsvorrichtung angehoben. Auf diese Weise kann die Reinigungsvorrichtung Treppenstufen hochlaufen und gleichzeitig Reinigungsaktivitäten ausführen.

In bevorzugten Ausgestaltungen ist die Reinigungsvorrichtung mit wenigstens einer Saugvorrichtung versehen, durch die Luft aus den Reinigungseinheiten angesaugt wird. Auf diese Weise kann von der Oberfläche gelöster Schmutz entfernt werden. Gleichzeitig resultiert ein Unterdruck in den Reinigungseinheiten, weshalb die Reinigungsvorrichtung vom Aussendruck gegen die Oberfläche gedrückt wird, weshalb die Reinigungsvorrichtung auch entlang von geneigten Flächen geführt werden kann.

Die Änderung der Richtung des Vorschubs der Reinigungsvorrichtung kann in einfacher Weise realisiert werden, indem die Position des Verdrängers bzw. die Position geändert wird, an der das Antriebselement nach unten verdrängt wird.

In einer ersten Ausgestaltung weist das Antriebselement einzelne Fusselemente auf, die bei einer Drehung um die Antriebsachse sequenziell zum Verdränger gelangen und vereinzelt nach unten verschoben bzw. verdrängt werden.

Alternativ kann das Antriebselement ein vorzugsweise vollständig in sich geschlossenes Antriebsband oder Hohlzylindersegment bilden, welches bei der Drehung um die Antriebsachse zyklisch über den Verdränger geführt wird, so dass das Antriebsband an der Position des Verdrängers entweder nach unten geneigt ist oder an der Position des Verdrängers wellenförmig nach unten und wieder nach oben geführt wird.

Die Steuervorrichtung kann einen oder mehrere über das Antriebselement vorzugsweise gleichmässig verteilte Verdränger aufweisen, die individuell betätigbar sind, so dass jeweils einer der Verdränger wahlweise betätigt werden kann, um die Richtung des Vorschubs der Reinigungsvorrichtung zu ändern. Beispielsweise sind die Verdränger vertikal verschiebbar gelagert, so dass sie mittels eines Aktuators betätigt werden können.

Alternativ kann ein einzelner Verdränger vorgesehen sein, welcher entlang dem Antriebselement verschiebbar ist, um dieses an einer ausgewählten Positionen nach unten zu verschieben bzw. zu verdrängen.

Der einzelne Verdränger wird vorzugsweise durch ein Stellwerk betätigt, welches mit einem Steuermotor verbunden ist. In einfachen Ausgestaltungen ist der Verdränger von einer Welle gehalten und über dem ringförmigen Antriebselement rotierbar, welches aus vertikal verschiebbaren Einzelteilen besteht oder einstückig ausgestaltet ist.

Die Richtung des Vorschubs der Reinigungsvorrichtung verläuft parallel zur Tangente, welche durch das nach unten verdrängte Teil des vorzugsweise kreisförmigen Antriebselements definiert wird. Je nach Ausgestaltung des Antriebselements und des wenigstens einen Verdrängers erfolgt die Richtungsänderung schrittweise oder kontinuierlich. Sofern der Verdränger kontinuierlich entlang dem Antriebselement verschoben werden kann, so erfolgt auch eine kontinuierliche Richtungsänderung. Sofern der Verdränger schrittweise verschoben wird oder mehrere Verdränger abschnittsweise zum Einsatz gelangen, so erfolgt eine schrittweise Richtungsänderung. Sofern mehrere Reinigungseinheiten vorgesehen sind, werden die Verdränger derart gesteuert, dass die nach unten verschobenen Teile der verschiedenen Antriebselemente Tangenten definieren, welche vorzugsweise parallel zueinander ausgerichtet sind. Sofern die Tangente nicht parallel ausgerichtet sind, so resultiert ein Schlupf, der in einem bestimmten Masse tolerierbar oder sogar wünschbar ist. Durch den bei nicht paralleler Ausrichtung der Tangenten resultierenden Schlupf resultieren gegeneinander wirkende Kräfte, die die Reinigungsvorrichtung in eine Laufspur drängen, die etwa entlang der Winkelhalbierenden der Tangenten verläuft.

Der Teil oder die Teile des Antriebselements welche in Kontakt mit der zu reinigenden Oberfläche gelangen, sind vorzugsweise derart gewählt, dass eine gewünschte Haftung eintritt. Die genannten Teile können aus Kunststoff oder auch aus einem weichelastischen Naturkautschuk gefertigt werden. Dabei ist es auch möglich die Fusselemente mit austauschbaren Schuhen zu bestücken, die aus den entsprechenden Materialien gefertigt sind. Sofern eine Schlupf vermieden werden soll, können die Fusselemente gelenkig mit den Biegebalken verbunden werden. Während die Gelenksachse entlang einem Kreis verläuft, kann das auf die Oberfläche abgestützte Fusselement in seiner Position verharren.

Die Verbindung zwischen dem Verdränger und dem Antriebselement erfolgt vorzugsweise ohne oder nur mit minimaler Reibung. Dazu werden vorzugsweise entsprechende Gleitelemente oder Rollenelemente vorgesehen. In besonders vorteilhaften Ausgestaltungen werden am Antriebselement und am wenigstens einen Verdränger Magnete angeordnet, die gegenpolig ausgerichtet sind. Sobald der Verdränger nach unten verschoben wird, wird auch die entsprechende Zone des Antriebselements durch magnetische Kraft nach unten verschoben, ohne dass Reibungsverluste entstehen. Vorzugsweise werden Magneten aus Samarium-Cobalt (SmCo) oder kostengünstigere Magneten aus Neodym-Eisen-Bor (NdFeB) vorgesehen.

Das Antriebselement ist beispielsweise ein biegbarer Ring vorzugsweise aus elastischem Kunststoffmaterial. Alternativ kann ein Antriebselement verwendet werden, das derart gelagert wird, dass dessen Antriebsachse gegenüber der Drehachse des Reinigungselements neigbar ist. Beispielsweise wird das Antriebselement mittels eines Kugelgelenks gehalten.

Das Antriebselement kann vorteilhaft auch aus einer Kette mit Gliedern bestehen, die mittels des Verdrängers sequenziell gegen die zu reinigende Oberfläche gedrückt werden.

In bevorzugten Ausgestaltungen umfasst das Antriebselement einen Ringkörper, an dessen Innenseite radial nach innen ausgerichtete Biegebalken angeordnet sind, die an den einander zugewandten Enden je mit einem der Fusselemente versehen sind. Die Fusselemente, die vorzugsweise in einem Kreis angeordnet sind, können durch den Verdränger an einer bestimmten Kreisposition nach unten verdrängt werden, so dass sie mit der Oberfläche in Kontakt gelangen und während der Kontaktphase eine Vorschubkraft auf die Reinigungsvorrichtung ausüben.

Die Drehachse des Reinigungselements bleibt vorzugsweise stets senkrecht zur Oberfläche ausgerichtet, weshalb diese vom Reinigungselement, beispielsweise daran vorgesehenen Bürsten, gleichmässig über den gesamten Querschnitt bearbeitet werden kann. Die zu reinigende Oberfläche wird daher über den gesamten Querschnitt der Reinigungselemente und somit der Reinigungsvorrichtung gleichmässig gereinigt, weshalb ein mehrfaches Überfahren desselben Bereichs der Oberfläche nicht erforderlich ist.

Es können unterschiedliche Reinigungselemente eingesetzt werden. Vorzugsweise wird ein ringförmiges, beispielsweise hohlzylindrisches Reinigungselement mit Bürstenelementen bzw. eine Ringbürste verwendet. Alternativ können auch Reinigungselemente vorgesehen werden, mittels denen die Oberflächen poliert werden. Die Reinigungsvorrichtung kann daher zum Reinigen und/oder zum Polieren von Oberflächen eingesetzt werden. Auf den Begriff Poliervorrichtung wird verzichtet, da beim Vorgang des Polierens ebenfalls stets eine Reinigung erfolgt.

Damit die Reinigungsvorrichtung Hindernisse leicht überwinden kann, sind die Bürsten vorzugsweise nach innen geneigt. Beispielsweise sind Neigungen von 5°-25° vorgesehen

In bevorzugten Ausgestaltungen ist das Reinigungselement mit dem Antriebselement drehfest gekoppelt. Durch den Antrieb des Antriebselements erfolgt daher nicht nur der Vorschub der Reinigungsvorrichtung, sondern auch der Antrieb des Reinigungselements. Dazu weist das Aufnahmeelement vorzugsweise einen Ringkörper auf, der mit dem Reinigungselement koppelbar ist. Beispielsweise weist der Ringkörper eine Aufnahmenut auf, in die das ringförmige Reinigungselement einsetzbar ist. Auf diese Weise kann die Reinigungsvorrichtung auch vorteilhaft gewartet werden. Sollte die Reinigungseinheit bzw. die Ringbürste Abnutzungserscheinungen aufweisen, so kann sie mit wenigen Handgriffen vom Ringkörper gelöst und ersetzt werden.

Der Antrieb des Antriebselements kann auf verschiedene Weise erfolgen. In vorzugsweisen Ausgestaltungen ist jede Reinigungseinheit mit einem Zahnkranz versehen. Die Zahnkränze der Reinigungseinheiten können seriell miteinander gekoppelt werden, so dass der mit der Einwirkung eines Motors auf einen einzelnen Zahnkranz alle miteinander gekoppelten Reinigungseinheiten angetrieben werden. Vorzugsweise werden mit dem Zahnkranz versehene kreisförmige Zahnradplatten vorgesehen, an denen das Antriebselement und Reinigungselement montierbar sind.

Alternativ kann jede Reinigungseinheit mit einer Antriebswelle versehen sein, die mit dem Antriebselement gekoppelt ist und von einem Motor angetrieben wird. Gleichzeitig kann die Antriebswelle mit dem Reinigungselement gekoppelt sein.

Der Motor kann durch elektrische Energie oder durch andere, vorzugsweise hydraulische Medien angetrieben werden.

In vorzugsweisen Ausgestaltungen sind mehrere Reinigungseinheiten, vorzugsweise drei Stück, vorgesehen, die über eine Rahmenstruktur miteinander verbunden sind. Durch die Verwendung von drei Reinigungseinheiten resultiert eine leicht steuerbare Reinigungsvorrichtung. Mit der Verwendung von vier Reinigungseinheiten können die Laufeigenschaften weiter verbessert werden.

Die Rahmenstruktur, die vorzugsweise für jede Reinigungseinheit einen Strukturarm aufweist, bildet vorzugsweise die tragende Struktur der Reinigungsvorrichtung und kann vorteilhaft gleichzeitig deren Gehäuse und Verschalung bilden. Vorzugsweise weist jeder Strukturarm eine Lagereinheit auf, mittels der eine Lagerwelle oder Antriebswelle gehalten werden kann, um die das Lagerelement und das Reinigungselement gedreht werden.

Durch die Rahmenstruktur oder Verschalung erfolgt gleichzeitig eine Abschirmung des Innenraums der Reinigungsvorrichtung, so dass von der Oberfläche gelöste Verunreinigungen innerhalb der Reinigungsvorrichtung gehalten bleiben und abgesaugt werden können. Dazu ist vorzugsweise eine Saugvorrichtung in die Reinigungsvorrichtung integriert, welche die Verunreinigungen ansaugen und über einen Luftkanal abtransportieren kann.

Nachfolgend wird die Erfindung anhand von Zeichnungen näher erläutert. Dabei zeigt:
- Fig. 1: in prinzipieller Ausgestaltung eine erfindungsgemässe Reinigungsvorrichtung 1 mit einer Reinigungseinheit 10, die ein Reinigungselement 11 und ein Antriebselement 12 umfasst, die vorzugsweise miteinander gekoppelt und vorzugsweise von einer einzigen Antriebseinheit 100 angetrieben sind;
- Fig. 2: eine erfindungsgemässe Reinigungsvorrichtung 1 in einer vorzugsweisen Ausgestaltung mit einer in Explosionsdarstellung gezeigten Reinigungseinheit 10, die ein reifenförmiges Reinigungselement 11 aufweist, welches auf ein radförmiges Antriebselement 12 aufsetzbar ist, das radial nach innen gerichtete Biegebalken 121 aufweist, die an den einander zugewandten Enden mit Fusselementen 122 versehen sind die von einem rotierbaren Verdränger 24 an dessen jeweilige Position nach unten verdrängt werden;
- Fig. 2a: das Antriebselement 12 von Figur 2 in einer Schnittdarstellung;
- Fig. 2b: der Verdränger 24 von Figur 2;
- Fig. 3: eine mit drei Reinigungseinheiten 10 versehene Reinigungsvorrichtung 1 mit einer dreiteiligen Rahmenstruktur 15 von oben gezeigt;
- Fig. 4: die Reinigungsvorrichtung 1 von Figur 3 von unten gezeigt mit einer vollständig bestückten Reinigungseinheit 10B und zwei teilweise demontierten Reinigungseinheiten 10A und 10C;
- Fig. 5: die Reinigungsvorrichtung 1 von Figur 3 ohne Rahmenstruktur 15;
- Fig. 6a, 6b: eine von der Seite und von unten gezeigte Reinigungseinheit 10 mit dem Verdränger 24 auf der linken Seite; und
- Fig. 6c, 6d: die von der Seite und von unten gezeigte Reinigungseinheit 10 von Figur 6a mit dem Verdränger 24 auf der rechten Seite.

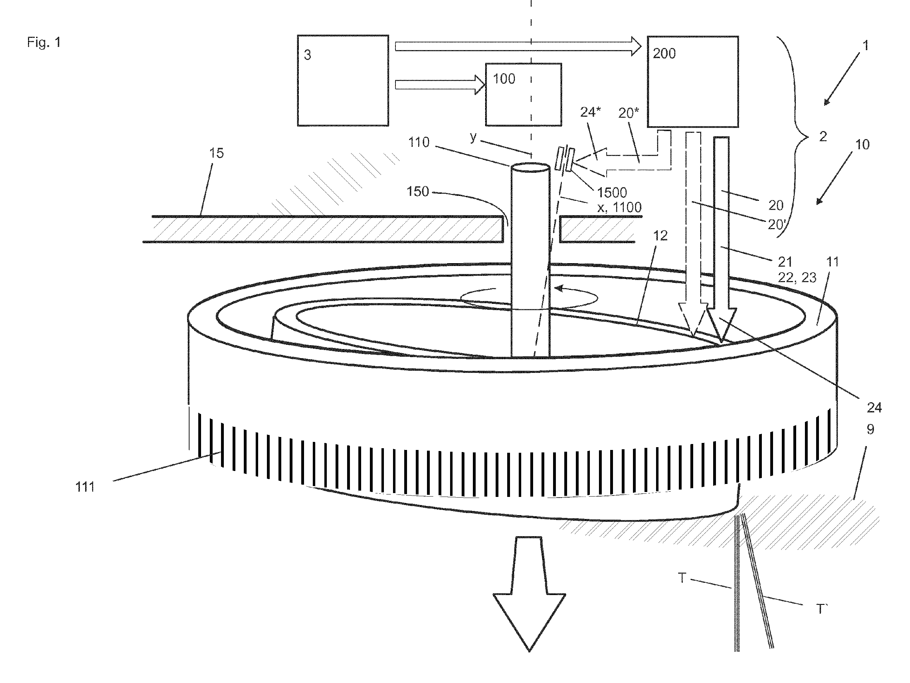

Figur 1 zeigt eine erfindungsgemässe Reinigungsvorrichtung 1 in einer prinzipiellen Ausgestaltung. Die Reinigungsvorrichtung 1 kann mehrere Reinigungseinheiten aufweisen, von denen eine in einer Explosionsdarstellung gezeigt ist. Die gezeigte Reinigungseinheit 10 umfasst ein Reinigungselement 11 und ein ringförmiges Antriebselement 12, welches von einer Antriebseinheit 100 angetrieben und von einer Steuervorrichtung 2 gesteuert wird.

In der gezeigten Ausgestaltung wird das Antriebselement 12 von einer Antriebswelle 110 angetrieben und von der Steuervorrichtung 2 an einer bestimmten Stelle gegen eine zu reinigende Oberfläche 9 gedrückt. Die Antriebswelle 110 ist in einem Lagersitz 150 gehalten, der in einer Rahmenstruktur 15 vorgesehen ist, welche die Vorrichtungselemente der Reinigungsvorrichtung 1 hält und vorzugsweise gleichzeitig die Verschalung oder das Gehäuse der Reinigungsvorrichtung 1 bildet.

Das Antriebselement 12 wird in der Folge entlang einer Fahrspur geführt, welche parallel zur Tangente T verläuft, die an der Stelle am Antriebselement 12 anliegt, an dem dieses die zu reinigende Oberfläche 9 berührt. Das Vorrichtungsteil, mit dem die Steuervorrichtung 2 das Antriebselement 12 an einer bestimmten Position nach unten drückt, ist symbolisch mit einem Pfeil 20 bezeichnet. Die Pfeilspitze symbolisiert einen Verdränger 24, welcher am Antriebselement 12 anliegt und dieses gegen die Oberfläche 9 drückt. Der Schaft des Pfeils 20 symbolisiert ein Stellwerk 21, 22, 23, welches von einem Steuermotor 200 betätigt wird, um den Verdränger 24 entlang dem Antriebselement 12 und gegebenenfalls vertikal zu verschieben.

Zur Änderung der Richtung des Vorschubs der Reinigungsvorrichtung 1 wird der Verdränger 24 entlang dem Antriebselement 12 verschoben. Dadurch wird eine neue von einem Pfeil 20' bezeichnete Tangente T' wirksam, parallel zu der die Reinigungsvorrichtung 1 nach der Verschiebung des Verdrängers 24 verschoben wird.

In Figur 1 ist eine Ausgestaltung der Reinigungseinheit 1 gezeigt, bei der das Antriebselement 12 als Ganzes geneigt wird. Der Teil des formstabilen Antriebselements 12, der die Oberfläche 9 kontaktieren soll, wird durch direkte Einwirkung des Verdrängers 24 nach unten gestossen, wodurch sich das Antriebselement 12 und dessen Drehachse x entsprechend neigen.

In Figur 1 ist gezeigt, dass diese Neigung auch indirekt durch Einwirkung eines Verdrängers 24* erreicht werden kann, der auf eine Welle 1100 einwirkt, von der das Antriebselement 12 gehalten ist. In der gezeigten Ausgestaltung wird die Lagervorrichtung 1500, von der die symbolisch gezeigte Welle 1100 gehalten ist, in eine bestimmte Richtung verdrängt. Dabei kann nicht nur die Richtung, sondern auch das Mass der Neigung der Welle 1100 gewählt werden.

Vorzugsweise ist das Reinigungselement 11 mit dem Antriebselement 12 drehfest gekoppelt, so dass bei einer Drehung des Antriebselements 12 auch das Reinigungselement 11 gedreht und der Reinigungsvorgang realisiert wird. Auf einen separaten Antrieb des Reinigungselements 11 kann dadurch verzichtet werden.

In der gezeigten Ausgestaltung sind das Antriebselement 12 und das Reinigungselement 11 als konzentrisch angeordnete Hohlzylinderelemente gezeigt. Die Drehachse y des Reinigungselements 11 ist zumindest annähernd senkrecht zur Oberfläche 9 ausgerichtet. Durch Einwirkung der Steuervorrichtung 2 wurde das Antriebselement 12 mit dessen Drehachse x gegenüber der Drehachse y des Reinigungselement 11 geneigt. Sofern eine vollständige Neigung des Antriebselements 12 realisiert werden soll, so wird das Reinigungselement 11 vorzugsweise mittels eines entsprechenden Gelenks, beispielsweise eines Kugelgelenks gelagert.

In der gezeigten Ausgestaltung ist an der Unterseite des Reinigungselements 11 eine Ringbürste 111 vorgesehen, mittels der die zu reinigende Oberfläche 9 gebürstet werden kann. In Figur 1 ist das Reinigungselement 11 leicht angehoben, so dass der Teil des Antriebselements 12 sichtbar ist, der mit der Oberfläche 9 in Kontakt steht. Beim Betrieb der Reinigungsvorrichtung 1 ist das Reinigungselement 11 hingegen vollständig auf die Oberfläche 9 abgesenkt.

Das Antriebselement 12, das in Figur 1 symbolisch gezeigt ist, kann ein in sich geschlossenes Hohlzylindersegment sein. Hingegen kann das Antriebselement 12 vorteilhaft auch durch einzelne Antriebsteile gebildet werden, die ringförmig angeordnet, jedoch nicht direkt miteinander verbunden sind. Die Antriebsteile können jedoch auch miteinander verbunden sein und eine Kette bilden.

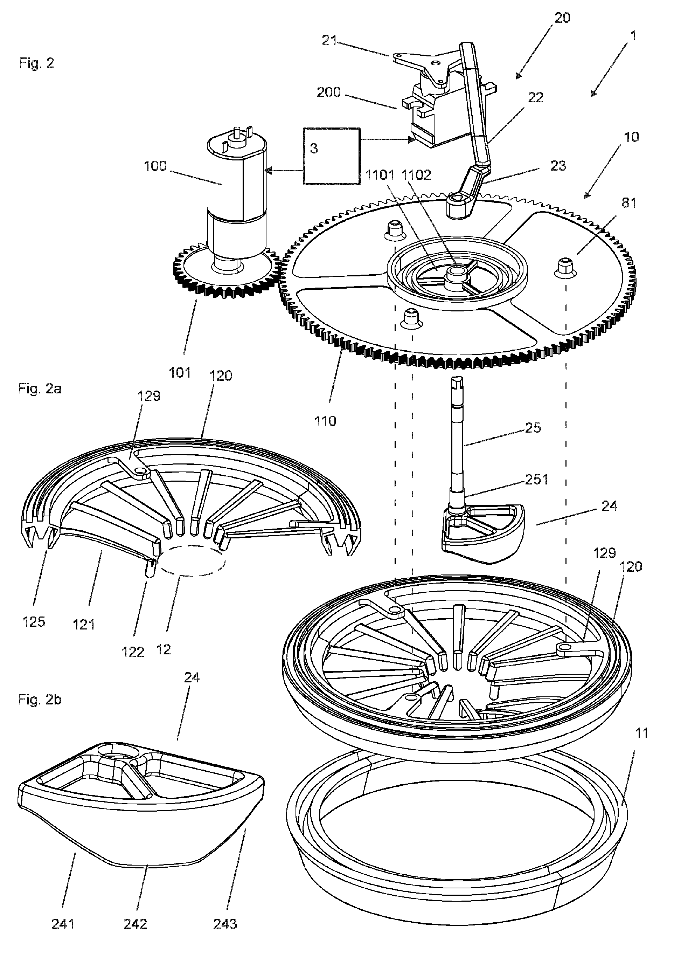

Figur 2 zeigt in Explosionsdarstellung eine erfindungsgemässe Reinigungsvorrichtung 1 in einer vorzugsweisen Ausgestaltung mit einer Reinigungseinheit 10, die ein reifenförmiges Reinigungselement 11 aufweist, welches auf ein radförmiges Antriebselement 12 aufsetzbar ist. Das Antriebselement 12 umfasst einen Ringkörper 120, an dessen Unterseite ein Kopplungselement, vorzugsweise ein ringförmig verlaufendes Aufnahmeelement 125 vorgesehen ist. In das Aufnahmeelement 125, das eine Doppelnut aufweist, ist das ringförmige Reinigungselement 11 einsetzbar, das an der Oberseite komplementär zur Doppelnut ausgestaltet ist. Das elastische Reinigungselement 11 kann daher mit wenigen Handgriffen mit dem Ringkörper 120 verbunden und wieder gelöst werden.

Figur 2a zeigt, dass am Ringkörper 120 radial nach innen ausgerichtete Biegebalken 121 vorgesehen sind, deren einander zugewandte Enden je ein Fusselement 122 halten. Die Fusselemente 122 sind ringförmig zumindest annähernd in einem Kreis angeordnet und können mittels eines Verdrängers 24 nach unten gedrückt werden, wodurch sich die Biegebalken 121 nach unten verbiegen. In Figur 2 und 2a ist gezeigt, dass einzelne der Biegebalken 121 frontseitig nach unten gebogen sind. Diese Durchbiegung wird durch einen Verdränger 24 bewirkt, welcher oberhalb der Fusselemente 122 von einer Welle 25 gehalten und um 360° drehbar ist. Anstelle eines Hebelwerks, mit Hebeln, die gedreht werden, kann auch eine Kraftübertagung mittels Zahnrädern erfolgen. In dieser Ausgestaltung kann der Verdränger beliebig oft um seine Achse gedreht werden.

Der Verdränger 24, der in Figur 2b einzeln gezeigt ist, weist ein Viertelsegment eines Hohlzylinders auf, an dessen Unterseite zwei zueinander abfallende Flanken 241, 241 vorgesehen sind, die eine waagerechte Arbeitsflanke 242 einschliessen. Der Verdränger 24 wird in Position gehalten, während das Antriebselement 12 in die eine oder andere Richtung gedreht wird. Die Fusselemente 122 gelangen daher zur ersten Flanken 241 bzw. 243 und werden entlang dieser nach unten verdrängt, bis sie die Arbeitsflanke 242 und mit der Unterseite der Fusselemente 122 somit auch die zu reinigende Oberfläche 9 erreichen. Für die Zeit, während der die Fusselemente 122 an der Arbeitsflanke 242 und an der Oberfläche 9 anliegen, erfolgt eine Kraftübertragung auf die Oberfläche 9, wodurch die Reinigungsvorrichtung 1 bzw. die Reinigungseinheit 10 nach vorn geschoben wird. Anschliessend gleiten die Fusselemente 123 über die zweite Flanke 243 bzw. 241 zurück nach oben. Mit einer vollständigen Drehung des Antriebselements 12 werden somit alle Fusselemente 122 einmal am Verdränger 24 vorbei geführt.

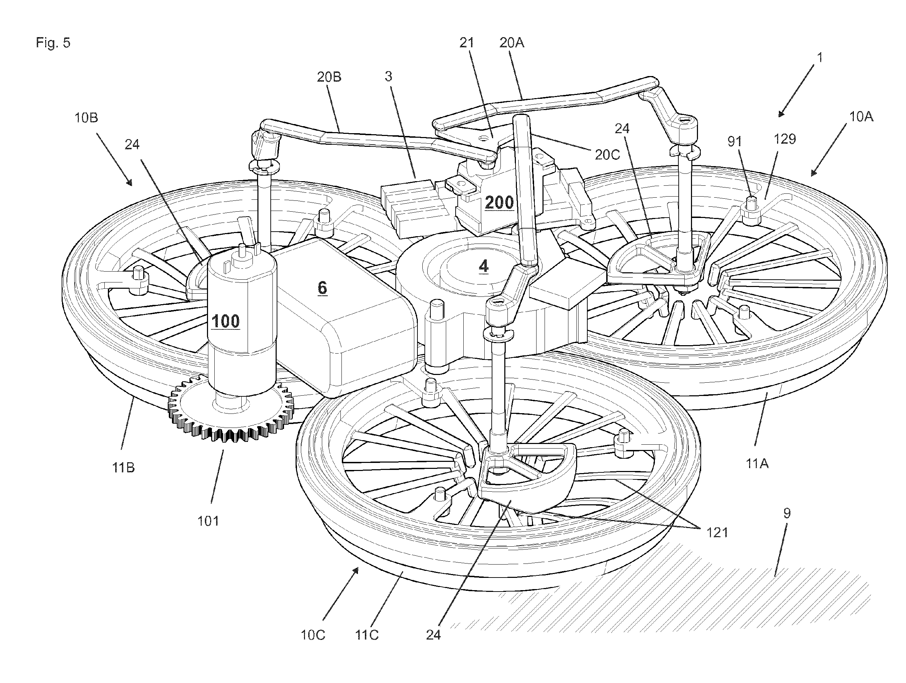

Figur 2 zeigt weiter, dass der Ringkörper 120 mit Montageflanschen 129 versehen ist, die Öffnungen aufweisen, durch die hindurch Montageschrauben 91 führbar sind (siehe auch Figur 5). Mittels der Montageschrauben 91 ist das Antriebselement 12 mit einer kreisförmigen Zahnradplatte 110 verbindbar, an der drei Montageelemente 81 mit einem Innengewinde vorgesehen sind. In vorzugsweisen Ausgestaltungen werden die miteinander zu verbindenden Teile der Vorrichtung mit Rastelementen versehen, die es erlauben, die Vorrichtungsteile durch Rastverbindungen miteinander zu koppeln und wieder zu lösen.

In der Mitte der Zahnradplatte 110 ist eine kreisförmige Öffnung 1101 vorgesehen, innerhalb der eine Radnabe 1102 gehalten ist, die der Durchführung und dem Halten der Welle 25 dient. Die Welle 25 kann in die Radnabe 1102 eingesetzt werden, bis ein Flanschelement 251 der Welle 25 an der Radnabe 1102 anliegt. Die in der Rahmenstruktur 15 gelagerte Welle 25 hält somit den Verdränger 24 und die Zahnradplatte 110, von der wiederum das Antriebselement 12 und das Reinigungselement 11 gehalten werden. An der Oberseite der Zahnradplatte 110 ist die Welle 25 mit einem Stellwerk 20 mit Hebelelementen 21, 22, 23 verbunden, mittels dessen die Welle 25 formschlüssig gehalten und gedreht werden kann. Dazu ist das erste Hebelelement 21 mit einem Steuermotor 200 verbunden, der von einer Steuereinheit 3 gesteuert wird. Durch Drehung des ersten Hebelelements 21, an das drei verschiedene Stellwerke 20A, 20B, 20C anschliessbar sind, kann die Welle 25 vorzugsweise um 360° gedreht werden, um den Verdränger 24 an einer gewünschten Position zu parkieren.

Figur 2 zeigt ferner einen Antriebsmotor 100, der über ein Zahnrad 101 mit der Zahnradplatte 110 gekoppelt ist und der ebenfalls von der Steuereinheit 3 gesteuert werden kann. Wie erwähnt genügt es, nur eine von mehreren miteinander gekoppelten Zahnradplatten 110 anzutreiben.

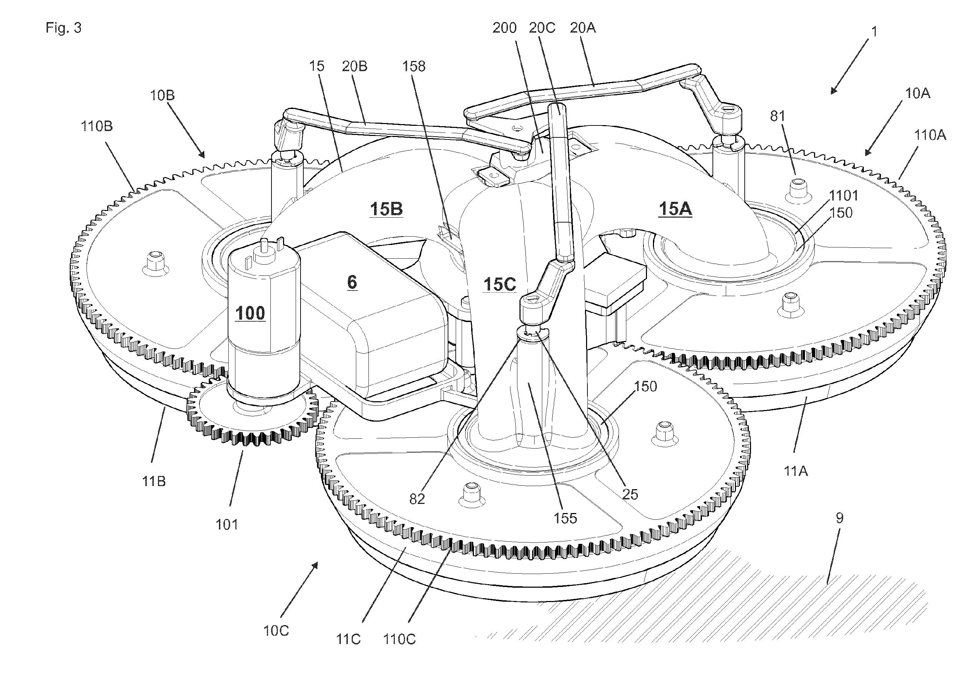

Figur 3 zeigt eine Reinigungsvorrichtung 1 mit drei Reinigungseinheiten 10A, 10B, 10C, wie sie in Figur 2 gezeigt sind. Die Reinigungseinheiten 10A, 10B, 10C sind durch Zahnradplatten 110A, 110B, 110C miteinander gekoppelt und von einer Rahmenstruktur 15 gehalten, die drei Strukturarme 15A, 15B, 15C aufweist. Die Strukturarme 15A, 15B, 15C weisen endseitig eine runde Dichtungsplatte 150 und ein Lagerelement 155. Die Dichtungsplatte 150 ist vorzugsweise dicht abschliessend in die zentrale Öffnung 1101 der zugehörigen Zahnradplatte 110A, 110B, 110C eingefügt, wodurch zu jeder der Reinigungseinheiten 10A, 10B, 10C ein an der Unterseite durch die zu reinigende Oberfläche 9 begrenzter Luftkanal gebildet wird. Im Lagerelement 155 ist die Welle 25 gelagert. An der Oberseite ist die Welle 25 mit einem Sprengring 82 versehen, welcher auf das Lagerelement 155 abgestützt ist und die Welle 25 hält.

Die Rahmenstruktur 15 bildet gleichzeitig die Verschalung und das abgeschlossenes Gehäuse der Reinigungsvorrichtung 1. Luft, die von einer Saugvorrichtung 4 (siehe Figur 5) aus den Reinigungseinheiten 10A, 10B, 10C angesaugt wird, wird kanalisiert und einer Ausgangsöffnung 158 zugeführt. Dort kann Schmutz in einer Tasche gesammelt oder nur ausgestossen werden.

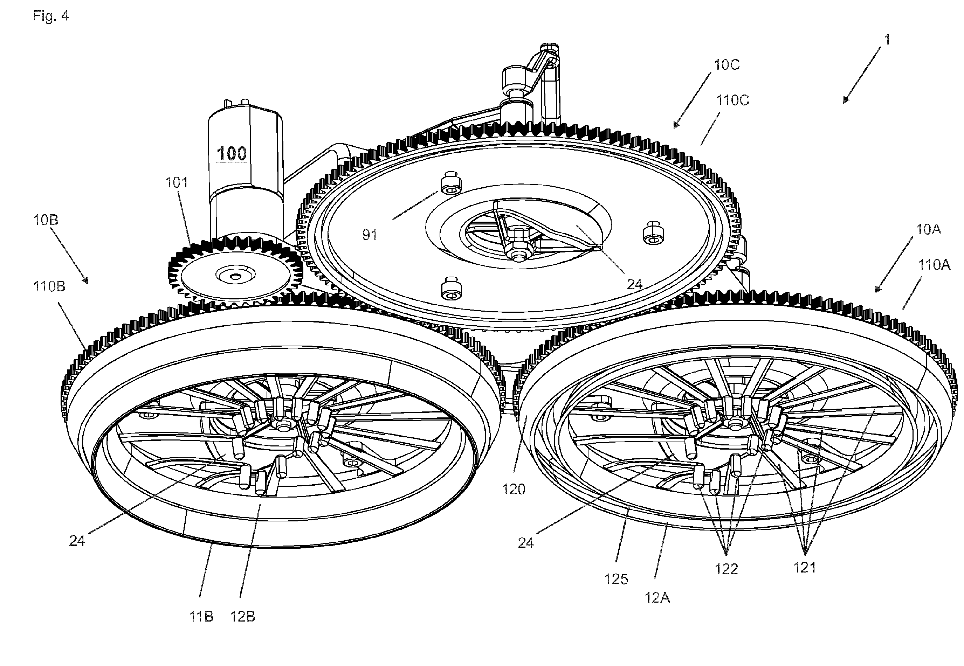

Figur 4 zeigt die Reinigungsvorrichtung 1 von Figur 3 von unten gezeigt mit einer vollständig bestückten Reinigungseinheit 10B und zwei teilweise demontierten Reinigungseinheiten 10A und 10C. Bei der Reinigungseinheit 10A wurde das Reinigungselement 11 entnommen. Bei der Reinigungseinheit 10C wurden das Reinigungselement 11 und das Antriebselement 12 demontiert. Verblieben ist die Zahnradplatte 110C mit den Montageschrauben 91 die der Befestigung des Antriebselements 12 dienen. Da die Zahnradplatten 110A und 110B der beiden ersten Reinigungseinheiten 10A und 10B in dieselbe Richtung rotieren und die Zahnradplatte 110C der dritten Reinigungseinheit 10C in die andere Richtung rotiert, liegen die Verdränger 24 der beiden ersten Reinigungseinheiten 10A und 10B auf der einen Seite der zugehörigen Welle 25 und der Verdränger 24 der dritten Reinigungseinheit 10C auf der gegenüberliegenden Seite der zugehörigen Welle 25. Die Lage des Verdrängers 24 ist daher in Abhängigkeit der Drehrichtung der Reinigungseinheiten 10 zu wählen.

Figur 5 zeigt die Reinigungsvorrichtung 1 von Figur 3 mit den unterschiedlich ausgerichteten Verdrängern 24. In dieser Ausrichtung der Verdränger 24 würde sich die Reinigungsvorrichtung 1, je nach Drehrichtung des Motors 100, von links unten nach rechts oben oder umgekehrt fortbewegen.

Nach der Entnahme der Rahmenstruktur 15 sind der Antriebsmotor 100, die Steuereinheit 3, die Absaugvorrichtung 4, der Steuermotor 201 und ein Behälter 6 ersichtlich, in dem beispielsweise eine Stromversorgungseinheit angeordnet ist.

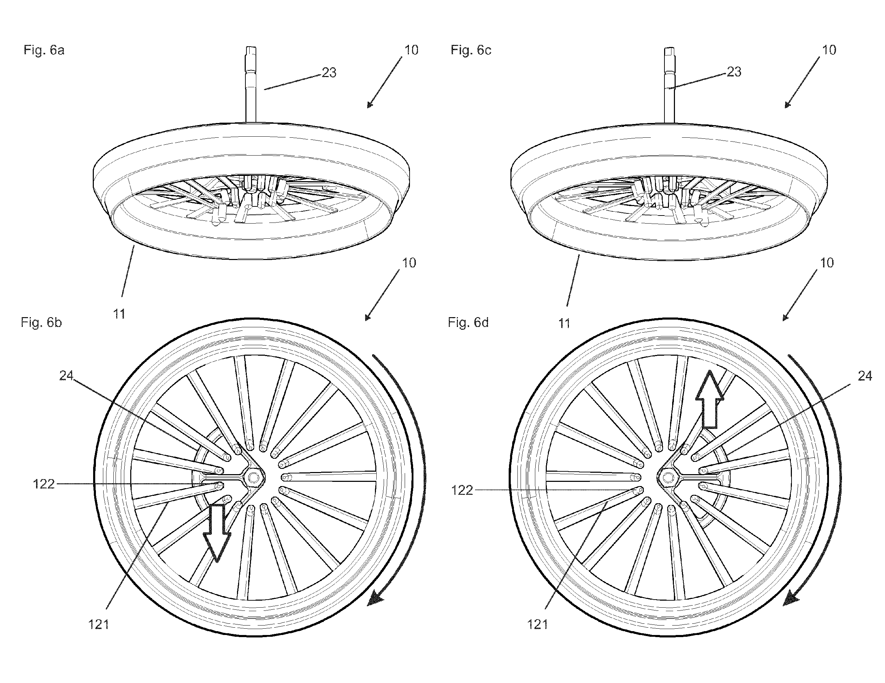

Die Figuren 6a und 6b zeigen die Reinigungseinheit 10 von Figur 2 von der Seite und von unten. Der Verdränger 24 wurde auf die linke Seite gedreht. Bei einer Drehung im Uhrzeigersinn wandert die Reinigungseinheit 10 daher senkrecht nach unten.

Die Figuren 6c und 6d zeigen dieselbe Reinigungseinheit 10 von der Seite und von unten. Der Verdränger 24 wurde auf die gegenüberliegende rechte Seite gedreht. Bei einer Drehung im Uhrzeigersinn wandert die Reinigungseinheit 10 senkrecht nach oben.

Die erfindungsgemässe Reinigungsvorrichtung 1 kann autonom betrieben werden. Elektrische Energie kann der Reinigungsvorrichtung 1 auf verschiedene Weise zugeführt werden. Die Reinigungsvorrichtung 1 kann mit Batterien oder mit Akkumulatoren versehen sein, die bedarfsweise geladen werden. Zu diesem Zweck kann die Reinigungsvorrichtung 1 derart programmiert sein, dass sie selbsttätig in eine Parkposition gefahren und induktiv oder galvanisch mit einer Stromquelle verbunden werden. Alternativ oder zusätzlich kann die Reinigungsvorrichtung 1 mit Solarpanels versehen sein, die elektrische Energie an die Akkumulatoren abgeben.

Die Steuereinheit 3, die vorzugsweise die wesentlichen Funktionen eines konventionellen, netzwerkfähigen Computers aufweist und über die erforderlichen Schnittstellen verfügt, ist mit einem Betriebsprogramm versehen, welches der Steuerung der Reinigungsvorrichtung 1 dient. Das Betriebsprogramm berücksichtigt vorzugsweise Prozessgrössen, die von Messfühlern bzw. Sensoren erfasst werden. Beispielsweise wird die jeweilige Position der Reinigungsvorrichtung 1 erfasst und aufgezeichnet. Auf diese Weise kann die Reinigung einer Oberfläche geprüft und protokolliert werden. Das Protokoll kann ferner durch Messdaten eines GPS-Empfangsgeräts ergänzt werden.

Für die Steuerung der Reinigungsvorrichtung 1 sind vorzugsweise Sensoren vorgesehen, welche das Erreichen des Randes der zu reinigenden Oberfläche 9 oder das Anstossen an ein Objekt signalisieren. Auf diese Weise kann die Steuereinheit 3 nach Auftreten eines entsprechenden Ereignisses eine Richtungsänderung vorgegeben, um die Reinigungsvorrichtung 1 in einen Bereich der Oberfläche 9 zu führen, der noch nicht gereinigt wurde.

Vorzugsweise sind weitere Sensoren vorgesehen, mittels denen die Beschaffenheit der zu reinigenden Oberfläche 9, und/oder die Art der Verunreinigung und/oder die Qualität der durchgeführten Reinigung geprüft werden kann. Dazu können vor Beginn oder nach Durchführung einer Reinigungsfahrt Kontrollfahrten oder Messefahrten durchgeführt werden.

Bei einer Messfahrt kann die Reinigungsvorrichtung 1 das zu reinigende Objekt 9, insbesondere dessen Beschaffenheit und Dimensionen vermessen und registrieren. Vorzugsweise werden die zu reinigenden Objekte 9 je mit einem Identifikationsmodul versehen, aus dem beispielsweise mittels RFID-Technologie die Identität des Objekts 9 ausgelesen werden kann. Auf diese Weise kann die Steuereinheit 3 die Daten des zu reinigenden Objekts 9 aus einer lokalen oder zentralen Datenbank auslesen. Daten zu den Objekten 9 können z.B. auch drahtlos über das Internet abgerufen werden. Anhand der ermittelten Objektdaten kann die Steuereinheit 3 die Reinigungsfahrten planen und beispielsweise auch feststellen, ob das Objekt 9 Stufen aufweist, die gegebenenfalls durch angepasste Auslenkung des Verdrängers 24 zu überwinden sind. Auf diese Weise kann die Reinigungsvorrichtung 1 unterscheiden, ob ein vorliegendes Hindernis eine verfestigte Verunreinigung oder eine Stufe in der Oberfläche ist. Die Reinigungsvorrichtung 1 ist daher nicht nur selbst wahrnimmt, sondern kann sich selbst optimal initialisieren und die gewonnenen Daten abspeichern und bei zukünftigen Reinigungsvorgängen wieder verwenden.

Anhand der Messdaten kann die Reinigungsvorrichtung 1 auch den Einsatz der Reinigungsmassnahmen und Reinigungsmedien planen. Reinigungsmedien, wie Wasser, Druckluft bzw. Abluft oder Lösungsmittel, können daher bedarfsweise effizient und sparsam eingesetzt werden. Sofern in der Nachkontrolle beispielsweise festgestellt wird, dass Verunreinigungen verblieben sind, können diese mit einem Lösungsmittel beaufschlagt werden. Lösungsmittel wird daher vorzugsweise nur punktuell und nicht flächendeckend eingesetzt.

Ferner werden von der Reinigungsvorrichtung 1 vorzugsweise alle Funktionen überwacht, so dass bei Fehlfunktionen entsprechende Fehlermeldungen drahtlos an eine Zentrale abgesetzt werden können.

## Patentansprüche

1. Vorrichtung (1) zum Reinigen einer Oberfläche (9), insbesondere einer Oberfläche (9) einer Fotovoltaikanlage, mit wenigstens einer Reinigungseinheit (10), die ein nach unten gegen die Oberfläche (9) gerichtetes Reinigungselement (11) und ein Antriebselement (12) aufweist, welches mit einer Antriebseinheit (100) gekoppelt ist, **dadurch gekennzeichnet, dass** das Antriebselement (12) ringförmig ausgestaltet, um eine Antriebsachse (x) drehbar gehalten und mit einer Steuervorrichtung (2) gekoppelt ist, welche wenigstens einen Verdränger (24) aufweist, der direkt oder indirekt derart mit dem Antriebselement (12) gekoppelt oder koppelbar ist, dass ein Teil des Antriebselements (12) nach unten gegen die Oberfläche (9) verschiebbar ist.

2. Reinigungsvorrichtung nach Anspruch 1, **dadurch gekennzeichnet,**
a) **dass** der Verdränger (24) direkt mit dem Antriebselement (12) gekoppelt oder koppelbar ist und einen Teil (122) des Antriebselements (12) soweit verdrängt, dass dieser Teil (122) die Oberfläche (9) kontaktiert; oder
b) **dass** der Verdränger (24*) direkt oder indirekt mit dem Antriebselement (12) gekoppelt oder koppelbar ist und das Antriebselement (12) soweit neigbar ist, dass ein Teil davon durch Einwirkung des Verdrängers (24*) die Oberfläche (9) kontaktiert.

3. Reinigungsvorrichtung nach Anspruch 1 oder 2, **dadurch gekennzeichnet, dass** das Antriebselement (12) einzeln verschiebbare Fusselemente (122) aufweist oder ein vorzugsweise vollständig in sich geschlossenes Antriebsband bildet, welches punktuell oder sektoriell nach unten verschiebbar ist.

4. Reinigungsvorrichtung nach Anspruch 1, 2 oder 3, **dadurch gekennzeichnet, dass** die Steuervorrichtung (2) mehrere über das Antriebselement (12) verteilte Verdränger (24) aufweist, die individuell betätigbar sind, oder dass die Steuervorrichtung (2) wenigstens einen Verdränger (24) aufweist, der entlang dem Antriebselements (12) oder einem Teil davon verschiebbar ist, so dass jeweils ein darunter liegender Teil des Antriebselements (12) nach unten verschiebbar ist.

5. Reinigungsvorrichtung nach einem der Ansprüche 1 - 4, **dadurch gekennzeichnet, dass** das Antriebselement (12) deformierbar ist oder dass das Antriebselement (12) vorzugsweise mittels eines Kugelgelenks derart gelagert ist, dass dessen Antriebsachse (x) gegenüber der Drehachse (y) des Reinigungselements neigbar ist, die vorzugsweise senkrecht zur Oberfläche ausgerichtet ist.

6. Reinigungsvorrichtung nach einem der Ansprüche 1 - 5, **dadurch gekennzeichnet,**
a) **dass** das Reinigungselement (11) ringförmig, vorzugsweise hohlzylindrisch ausgestaltet ist und das Antriebselement (12) umfasst; und/oder
b) **dass** das Reinigungselement (11) mit dem Antriebselement (12) drehfest gekoppelt ist; und/oder
c) **dass** das Reinigungselement (11) eine ringförmige Bürste umfasst.

7. Reinigungsvorrichtung nach einem der Ansprüche 1 - 6, **dadurch gekennzeichnet, dass** das Antriebselement (12) einen Ringkörper (120) aufweist, an dessen Innenseite radial nach innen ausgerichtete Biegebalken (121) angeordnet sind, die an den einander zugewandten Enden gelenkig oder fest je mit einem der Fusselemente (122) verbunden sind.

8. Reinigungsvorrichtung nach einem der Ansprüche 1 - 7, **dadurch gekennzeichnet, dass** jede Reinigungseinheit (10A, 10B, 10C) mit einem Zahnkranz (110A, 110B, 110C) versehen ist, die miteinander gekoppelt sind und von denen wenigstens einer von einem Motor (100), vorzugsweise einen Elektromotor, antreibbar ist oder dass jede Reinigungseinheit (10A, 10B, 10C) über eine Welle (110) angetrieben wird.

9. Reinigungsvorrichtung nach einem der Ansprüche 1 - 8, **dadurch gekennzeichnet, dass** wenigstens zwei Reinigungseinheiten (10A, 10B, 10C) vorgesehen sind, die über eine Rahmenstruktur (15) miteinander verbunden sind, die über je einen Strukturarm (15A, 15B, 15C) vorzugsweise dicht abschliessend mit jeder der Reinigungseinheiten (10A, 10B, 10C) verbunden ist; und/oder die eine Verschalung mit wenigstens einem Luftkanal bildet, über den mittels einer Ansaugvorrichtung (4) Luft durch die Reinigungseinheiten (10A, 10B, 10C) ansaugbar ist.

10. Reinigungsvorrichtung nach einem der Ansprüche 1 - 9, **dadurch gekennzeichnet, dass** die Steuervorrichtung (2) einen Steuermotor (200) umfasst, welcher je über ein Stellwerk (20A, 20B, 20C) mit dem wenigstens einen Verdränger (24) in jeder der Reinigungseinheiten (10A, 10B, 10C) verbunden ist.

11. Reinigungsvorrichtung nach Anspruch 10, **dadurch gekennzeichnet, dass** der Zahnkranz (110A, 110B, 110C) als Kreisplatte ausgestaltet ist, die von einer Welle (25) drehbar gehalten ist, welche in der Rahmenstruktur (15) gelagert, an der Unterseite mit dem Verdränger (24) verbunden und an der Oberseite durch das Stellwerk (20A, 20B, 20C bzw. 21, 22, 23) mit dem Steuermotor (200) verbunden ist.

12. Reinigungsvorrichtung nach einem der Ansprüche 6-11, **dadurch gekennzeichnet, dass** der Ringkörper (120) ein Kopplungselement, vorzugsweise ein Aufnahmeelement (125) aufweist, welches mit dem Reinigungselement (11) koppelbar ist.

13. Reinigungsvorrichtung nach einem der Ansprüche 1 - 12, **dadurch gekennzeichnet, dass** die Verdränger (24) in den Reinigungseinheiten (10A, 10B, 10C) mittels der Steuervorrichtung (2) und der Steuereinheit (3) derart positionierbar sind, dass die nach unten verdrängten Teile der Antriebselemente (12), während der Drehung der Antriebselemente (12) weitgehend parallel zueinander und in dieselbe Richtung verlaufen.

14. Reinigungsvorrichtung nach einem der Ansprüche 1 - 13, **dadurch gekennzeichnet,**
a) **dass** der wenigstens eine Verdränger (24) rampenförmig ausgestaltet ist und vorzugsweise ein Segment eines Hohlzylinders bildet, welches eine erste und eine zweite schräg verlaufende Flanke (241, 243) aufweist, die eine Wirkungsflanke (242) einschliessen, oder
b) **dass** der wenigstens eine Verdränger (24) eine drehendes Element, wie eine Rolle, aufweist, welches am Antriebselement (12) anliegt, oder
c) **dass** am Antriebselement (12) und an dem wenigstens einen Verdränger (24) gegenpolig ausgerichtete Magneten vorgesehen sind.

15. Reinigungsvorrichtung nach einem der Ansprüche 1 - 14, **dadurch gekennzeichnet, dass** der Reinigungsvorrichtung (1) Medien wie elektrische Strom, Luft und/oder Wasser zuführbar sind, die für Reinigungszwecke und oder für Antriebszwecke verwendbar sind.
